# DEMANDE DE BREVET EUROPEEN

(11) **EP 0 970 839 A1**
(43) Date de publication de la demande: **12.01.2000**
(21) Numéro de dépôt: 99390013.3
(22) Date de dépôt: 07.07.1999
(51) Int. Cl.: B60K 41/00

(54) **Dispositif pour transformer au moins une commande à pied d'un véhicule en commande à main**

(30) Priorité: 10.07.1998 FR 9808940
(71) Demandeur: Sarl P.M.T.L., 32430 Cologne (FR)
(72) Inventeur: Santalucia, Michel, 31490 Brax (FR)
(74) Mandataire: Ravina, Bernard

(57) **Abrégé**

Le dispositif (1) est destiné à être fixé à l'un des éléments de direction d'un véhicule à moteur et comprend un premier élément (3), dans lequel est creusée au moins une gorge (4) continue constituant logement pour au moins un câble (5) déformable en flexion et indéformable en torsion auquel sont rigidement fixés plusieurs leviers de transmission (6) comportant chacun une tête d'articulation (7) par laquelle ils sont solidarisés à au moins un second élément (8) mobile en translation par rapport au précédent à l'encontre de l'action d'un organe élastique. Les éléments (3, 8) sont associés à un capteur (10) apte à délivrer un signal électrique de valeur représentative de la position en translation des deux éléments (3, 8) l'un par rapport à l'autre, ce signal étant utilisable pour la commande de l'accélération ou des freins ou de l'embrayage.

## Description

La présente invention est relative à un dispositif destiné à être fixé ou intégré à un volant de direction et comportant les commandes de frein et/ou de gaz et/ou d'embrayage et/ou de changement de vitesse de ce véhicule, ce dispositif étant principalement destiné à équiper des véhicules pour personnes privées de l'usage de leurs jambes.

Il y a lieu de noter que par câble indéformable en torsion on entend un câble dont la déformation élastique en torsion, entre deux sections distantes l'une de l'autre de quelques dizaines de centimètres sous l'effet d'un couple de valeur élevée, demeure insignifiante.

Par ailleurs il faut entendre par câble tout élément longiligne déformable élastiquement en flexion et indéformable en torsion selon la définition précédente.

On connaît du document DE-A-2 333 546 un dispositif de commande constitué d'un volant comprenant une partie rigide formant une âme porteuse. Cette partie rigide est disposée dans une gaine souple pouvant tourner autour de l'axe de l'âme porteuse. À cette gaine souple sont fixés des leviers de transmission fixés par ailleurs à des organes de traction agissant sur la pédale de l'accélérateur. Par rotation de la gaine sur l'âme porteuse, l'utilisateur du véhicule agit sur la commande des gaz.

Le document EP-A-69 090 montre un appareil pour transformer la commande à pied de l'accélérateur d'un véhicule en commande à main. Cet appareil, tout comme celui décrit dans le DE-A-2 333 546 comporte une partie fixe sous forme de tore et une partie mobile sous forme de gaine montée sur la partie fixe avec possibilité de tourner par rapport à la partie fixe. À cette partie mobile est fixé un mécanisme à leviers de transmission auquel est solidarisé un mécanisme à poussoirs reliés à la pédale d'accélérateur. Entre le mécanisme à leviers et le mécanisme à poussoirs est monté un collier de support associé à une couronne de butée montée sur le collier support et pouvant tourner par rapport à ce dernier. À la couronne de butée est solidarisé le mécanisme à levier de transmission de mouvement. Au collier de support est solidarisé le mécanisme de poussoir.

Le document EP-A-114 673 montre un dispositif de contrôle d'accélération pour handicapé des membres inférieurs.
Au volant de direction est associée une roue à main, cette roue à main est montée de manière fixe en rotation par rapport au volant de direction et mobile en translation selon l'axe de la colonne de direction. À cette roue sont fixé deux tiges de transmission solidaires d'une bague montée fixe axialement par rapport au volant de direction pour actionner un dispositif d'accélération par l'intermédiaire d'une bague 12 montée autour du fourreau de direction.
Le document EP-A-647 540 montre un dispositif pour actionner l'accélérateur d'une automobile par des conducteurs privés de l'usage de leurs jambes.
Ce dispositif comporte un volant de contrôle monté fixe en rotation par rapport au volant de conduite mais libre en translation axiale par rapport à ce dernier pour actionner une transmission de mouvement connectée à la pédale d'accélérateur. Cette transmission de mouvement comporte un collier monté autour du fourreau de direction. Ce collier est guidé en translation par des tiges de guidage solidaires des rayons du volant de direction et est fixé à des tiges solidaires du volant ou de l'anneau de contrôle.

Tous ces dispositifs et appareils de l'état de la technique antérieure exigent pour leur mise en place des interventions tant au niveau du volant que du fourreau de direction et sont d'un encombrement important. Pour pallier ces inconvénients ont été mis en oeuvre des dispositifs intégrant des commandes électriques comme celui décrit dans le document EP-A-681 938. Ce dispositif met en oeuvre un élément annulaire creux dans lequel est formé un siège recevant un câble ayant des propriétés élastique lorsqu'il est soumis à torsion auquel sont fixés plusieurs leviers dont un agit sur un potentiomètre d'un moyen de commande électrique de l'une des commandes du véhicule.

L'inconvénient du dispositif décrit dans le document précité réside essentiellement dans le fait de la nécessité d'espacer les leviers pour permettre leur pivotement. Pour cette raison, le dispositif ne peut comporter une surface d'actionnement uniforme et continue et il en résulte un risque de pincement des doigts entre deux leviers lors de l'actionnement. En outre les leviers en position de repos sont parallèles au plan du volant et en débordement par rapport au dit volant. Cette disposition peut rendre malaisée la saisie de volant et peut masquer en partie ou en totalité les instruments de bord du véhicule.

La présente invention à pour but de pallier les inconvénients précédemment cités en mettant en oeuvre un dispositif destiné à être fixé sur l'élément circonférentiel du volant de direction ou bien intégré à ce dernier.

À cet effet, le dispositif de commande à main destiné à être fixé à l'un des éléments de direction d'un véhicule à moteur et comprenant des moyens de commande de l'accélération du véhicule et/ou des moyens de commande du freinage et/ou des moyens de commande de l'embrayage et débrayage de la boîte à vitesse et/ou des moyens de commande du changement de vitesse, se caractérise essentiellement en ce qu'il comprend un premier élément, dans lequel est creusée au moins une gorge continue constituant logement pour au moins un câble déformable en flexion et indéformable en torsion auquel sont rigidement fixés à écartement les uns des autres plusieurs leviers de transmission comportant chacun à l'opposé du câble, extérieurement à la gorge, une tête d'articulation, les leviers par leur tête d'articulation étant solidarisés à au moins un second élément, monté coaxialement par rapport au premier élément, les deux dits éléments étant montés l'un par rapport à l'autre de manière fixe en rotation et mobile en translation selon leurs axes géométriques de révolution, l'un vers l'autre et inversement en éloignement l'un de l'autre, entre une position extrême d'écartement et une position extrême d'enfoncement, l'un des dits éléments étant destiné à être fixé à l'un des éléments de direction et l'autre élément étant destiné à être manoeuvré par le conducteur et lesdits éléments étant associés à un même capteur susceptible de délivrer un signal électrique de valeur représentative de leur degré d'éloignement ou d'enfoncement l'un par rapport à l'autre, ce signal électrique étant destiné à être utilisé pour la commande de l'accélération ou des freins ou de l'embrayage.

Cette disposition permet d'obtenir une surface d'actionnement continue sans éléments susceptibles de masquer le tableau de bord du véhicule.

De préférence le signal électrique délivré par le capteur est utilisé pour la commande de l'accélération.

Selon une autre caractéristique de l'invention, le mouvement d'enfoncement des deux éléments l'un par rapport à l'autre s'effectue à l'encontre d'une force de rappel vers la position extrême d'écartement. Ainsi par relâchement de l'action exercée par le conducteur sur l'élément d'actionnement, ce dernier sous l'effet de la force de rappel revient de lui-même en position extrême d'écartement ce qui se traduit par une décélération du véhicule.

Le câble transmission est monté dans le logement avec possibilité de pivoter sur lui-même autour de son axe longitudinal. Son indéformabilité en torsion permet lors de l'enfoncement des deux éléments l'un vers l'autre de transmettre à tous les leviers un même mouvement de pivotement et d'assurer le déplacement des deux dits éléments selon une translation et ce que l'effort résultant qui génère leur déplacement relatif soit excentré ou pas.

Selon une autre caractéristique de l'invention, chaque levier comprend un pied par lequel il est rigidement fixé à au moins un câble de transmission, et par lequel il est monté dans un siège pratiqué dans la gorge et formant de préférence empreinte en creux dans cette dernière. Avantageusement, selon une autre caractéristique de l'invention, le pied de chaque levier est doté d'au moins un logement dans lequel est engagé au moins un câble de transmission, la portion de câble située dans le logement y étant immobilisée par rapport à ce dernier sans possibilité de déplacement axial, de mouvement rotation autour de son axe, de mouvement de pivotement et de fléchissement afin que lors du mouvement d'enfoncement des deux éléments l'un vers l'autre, des efforts de flexion puissent apparaître dans le câble, ces efforts de flexion étant à l'origine de l'effort de rappel.

Selon une autre caractéristique de l'invention, l'effort de rappel est généré par au moins un organe élastique de rappel interposé entre les deux éléments. De préférence l'organe élastique de rappel est constitué par un ressort à spire et parallèlement à l'axe géométrique de révolution, le premier élément est pourvu d'un pion saillant autour duquel est engagé l'organe élastique de rappel, ce dit organe étant par ailleurs engagé dans une forme de douille ménagée dans le second élément.

D'autres avantages et caractéristiques de l'invention apparaîtront à la lecture de la description d'une forme préférée de réalisation, donnée à titre d'exemple non limitatif en se référant aux dessins annexés en lesquels,

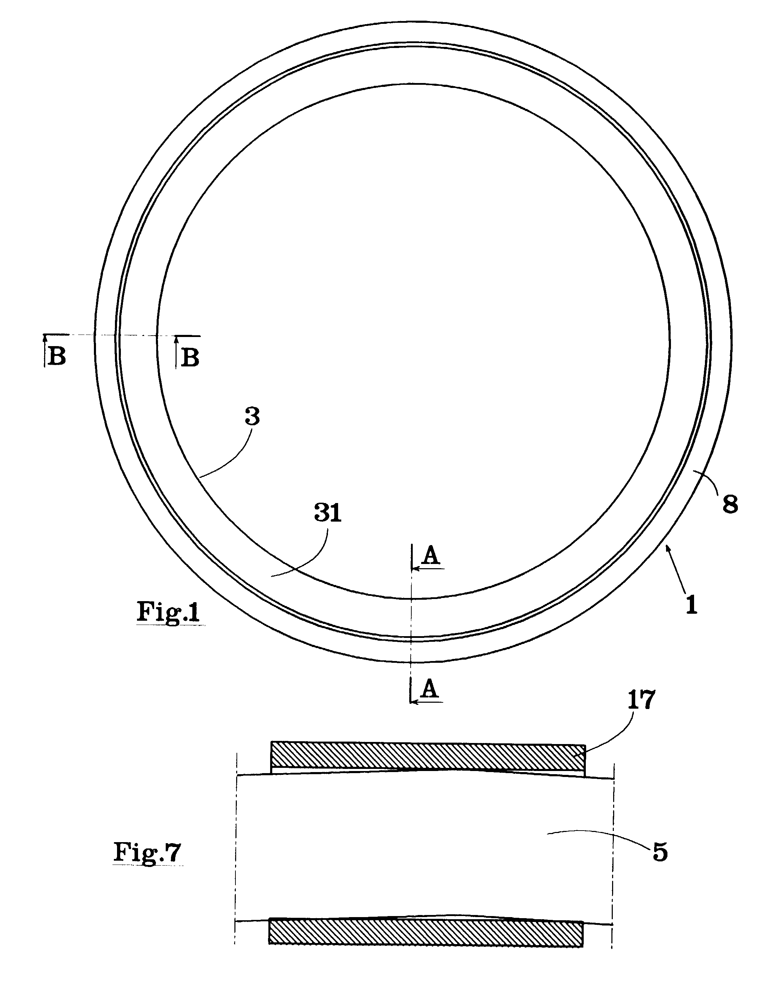

- la figure 1 est une vue de face d'un dispositif selon l'invention,

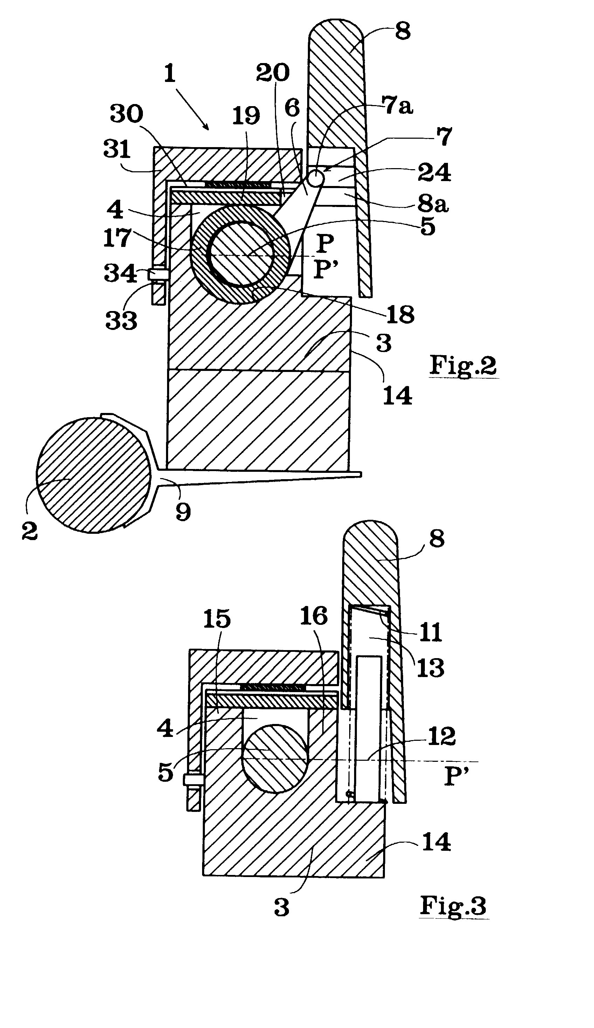

- la figure 2 est une vue en coupe transversale du dispositif selon la ligne AA de la figure 1 les premier et second éléments dudit dispositif étant en position extrême d'écartement,
- La figure 3 est une vue en coupe du dispositif selon la ligne BB de la figure 1,

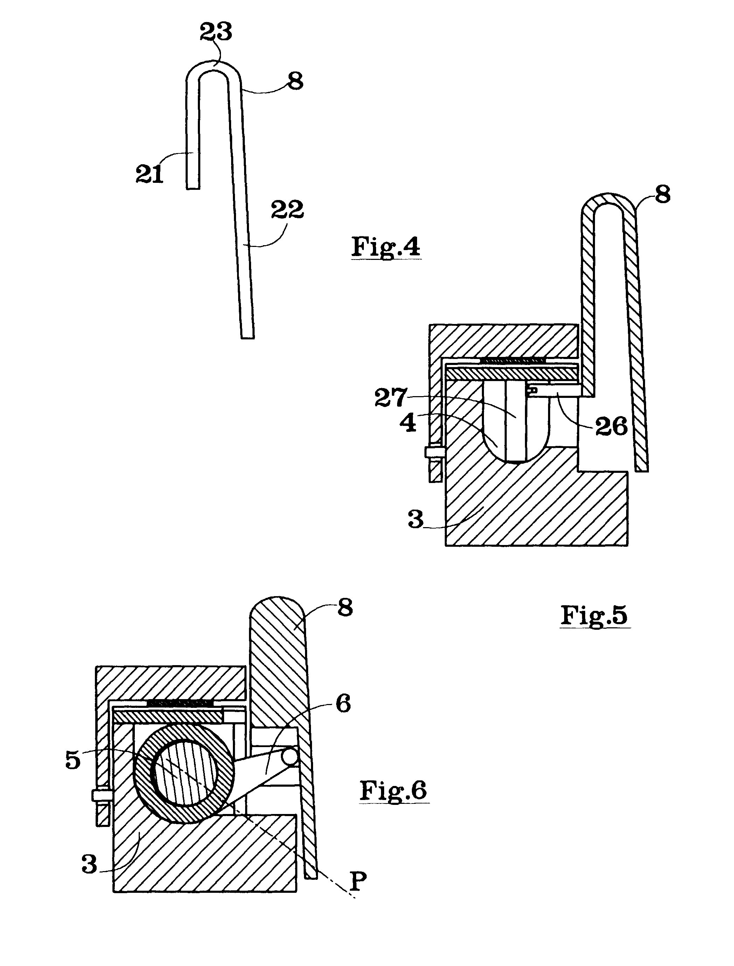

- La figure 4 est une section droite du second élément,
- la figure 5 est une vue en coupe du dispositif au niveau du capteur,
- la figure 6 est une vue en coupe du dispositif, les premier et second éléments du dispositif étant en position extrême d'enfoncement,
- la figure 7 est une vue en coupe, selon une échelle agrandie, du montage du câble dans le pied d'un levier de transmission.

Tel que représenté le dispositif 1 de commande à main selon l'invention est destiné à être fixé à l'un des éléments de direction d'un véhicule à moteur par exemple le volant 2 de direction. Le dispositif peut aussi être fixé à la colonne de direction et, dans ce cas, il se substitue au volant de direction.

Selon la forme préférée de réalisation, ce dispositif 1 intègre les commandes de l'accélérateur et les commandes du frein, il peut également intégrer les commandes de l'embrayage et débrayage ainsi qu'éventuellement du changement de vitesse dans le cas ou le véhicule ne serait pas équipé d'une boîte à vitesse automatique.

Conformément à l'invention, le dispositif de commande comprend un premier élément 3 substantiellement en forme d'anneau circulaire, dans lequel est creusée une gorge 4 continue épousant le contour d'un cercle et présentant un fond arrondi. Dans cette gorge 4 est monté avec possibilité de rotation sur lui-même, un câble 5 déformable en flexion et indéformable en torsion. Ce câble présente un diamètre inférieur à la profondeur de la gorge et sa la longueur est telle que les extrémités de ce dernier, après mise en place dans la gorge 4 sont écartées l'une de l'autre de quelques millimètres. En outre, le diamètre du câble est sensiblement égal à la largeur de la gorge 4.

À ce câble 5 sont rigidement fixés à écartement constant les uns des autres, plusieurs leviers 6 identiques, de transmission de mouvement comportant chacun à l'opposé du câble 5, une tête d'articulation 7 venant se disposer extérieurement à la gorge 4. Ces leviers 6, par rapport au câble sont tous inclinés de la même manière.

Chaque levier 6 comporte un pied 17 tubulaire, de surface externe cylindrique, présentant selon son axe longitudinal, un logement traversant de section droite circulaire, dans lequel s'engage le câble 5. Le levier 6 est fixé rigidement au câble 5 par son pied 17 comme décrit plus loin. Les leviers 6, par leur tête d'articulation 7, sont solidarisés à un second élément 8 substantiellement en forme d'anneau circulaire, monté coaxialement autour du premier élément 3. La tête 7 de chaque levier, tout en étant solidaire du second élément est montée de manière à pouvoir se déplacer radialement par rapport à ce dernier. À cet effet la tête 7 de chaque levier 6 est constituée par deux pivots 7a alignés et axialement opposés, de forme cylindrique et le second élément d'actionnement comprend, en regard du premier élément 3, une pluralité de glissières 8a régulièrement écartées, dans chacune desquelles s'engage en coulissement la tête 7 d'un levier 6 et d'un seul.

Les deux éléments 3, 8 sont montés l'un par rapport à l'autre de manière fixe en rotation et mobile en translation entre une position extrême d'écartement et une position extrême d'enfoncement et inversement et ce seulement selon leurs axes géométriques de révolution. De préférence le mouvement d'enfoncement des deux éléments l'un dans l'autre s'effectue à l'encontre d'un effort résultant, de rappel qui tend à ramener les deux éléments 3, 8 en position extrême d'écartement, cet effort de rappel étant principalement généré par un organe élastique de rappel 11 interposé entre les deux éléments 3, 8 et constitué par un ressort à spire. De préférence ce ressort à spires 11 est engagé autour d'un pion saillant 12de maintien et de centrage, disposé de manière parallèle à l'axe géométrique de révolution. Par ailleurs l'organe élastique 11 ainsi que le pion 12 sont engagés dans une forme de douille 13 ménagée dans le second élément 8. Avantageusement seront prévus plusieurs organes élastiques et plusieurs pions saillants régulièrement répartis.

La disposition de câble indéformable en torsion, et de leviers fixés rigidement au câble assure la transmission sans perte à tous les leviers et selon une amplitude identique pour tous, du mouvement de pivotement communiqué par exemple à l'un d'entre eux seulement. En raison de cette caractéristique et ce malgré le couple de basculement que peut induire un effort d'enfoncement exercé de manière excentrée par le conducteur, le second élément ne peut basculer et est forcé à se déplacer en translation. Ainsi les risques de coincement par arc-boutement sont écartés.

Tel que représenté le premier élément 3 est fixé par des crochets 9 au volant de direction 4 et occupe une position fixe par rapport à ce demier, le second élément 8, mobile en translation par rapport au volant et au premier élément est destiné à être manoeuvré par le conducteur pour l'actionnement de l'une des commandes du véhicule, par exemple sans que cela soit limitatif, l'accélérateur. À cet effet, un capteur électrique 10 est interposé mécaniquement entre les deux éléments 3, 8 pour délivrer un signal électrique de valeur représentative de leur position relative l'un par rapport à l'autre. En variante, le premier élément 3 est destiné à être manoeuvré par le conducteur pour actionner le capteur électrique 10 et le second élément 8 est fixé au volant ou bien à la colonne de direction et constitue dans ce cas le corps du volant.

Selon la forme préférée de réalisation, le premier élément 3 comprend d'une part une embase 14 en forme de couronne circulaire comportant un rebord circonférentiel intérieur et un rebord circonférentiel extérieur et d'autre part deux parois sans fin l'une interne 15 l'autre externe 16, toutes deux en saillie sur l'embase 14, disposées concentriquement à écartement l'une de l'autre et formant la gorge 4 du câble 5. Avantageusement la paroi interne 15 est située dans le prolongement du rebord circonférentiel interne de la couronne circulaire et la paroi externe 16 est disposée à écartement du rebord circonférentiel externe. Selon cette disposition, le pion de centrage 12 est en saillie sur la surface en couronne circulaire située entre la paroi sans fin externe 16 et le rebord circonférentiel externe de l'embase 14.

Dans la gorge 4 sont pratiqués à intervalle régulier les uns des autres plusieurs sièges 18 destinés à recevoir respectivement les pieds 17 des leviers 6. Chaque siège 18 est formé par une empreinte en creux creusée dans le fond de la gorge. Cette empreinte en creux se présente sous forme d'une portion de surface cylindrique. Le pied de chaque levier s'emboîte dans le siège correspondant pour y être parfaitement guidé en rotation lors du pivotement du levier. Par ailleurs cet emboîtement interdit le déplacement du pied selon la circonférence de la gorge ce qui assure le positionnement précis du câble dans son logement.

La gorge 4 est recouverte d'une paroi annulaire 19 venant au contact ou à très faible distance du pied 17 de chaque levier 6 afin de maintenir le pied 17 dans son siège 18. Cette paroi annulaire 19 est dotée de plusieurs échancrures radiales 20 pratiquées vers le centre depuis son rebord périphérique externe, dans chacune desquelles s'engage un levier 6. En correspondance avec chaque échancrure de la paroi annulaire de recouvrement 19, la paroi externe sans fin 16 présente une échancrure 16a dans laquelle s'engage le levier correspondant lors du mouvement d'enfoncement des deux éléments 3, 8 l'un dans l'autre. Chaque levier 6, en position d'écartement maximal du second élément par rapport au premier vient buter contre le fond de l'échancrure 20 correspondante ce qui limite la trajectoire d'écartement des deux éléments l'un par rapport à l'autre.

Selon la forme préférée de réalisation, la paroi annulaire est fixée par collage contre les rives des parois sans fin interne 15 et externe 16.

Selon la forme préférée de réalisation, le second élément 8 est formé de deux jantes cylindriques d'inégales largeurs et de même épaisseur, l'une interne 21 et l'autre externe 22, disposées concentriquement l'une dans l'autre, et réunies l'une à l'autre par une paroi de liaison 23 de forme semi torique, la jante 21 de faible largeur étant la jante interne. La surface externe de la paroi semi torique constitue la surface d'actionnement continue sur laquelle l'utilisateur applique l'effort d'enfoncement. Ce second élément est disposé autour de la paroi externe sans fin 16 du premier élément et évolue en translation au droit de la surface en couronne circulaire délimitée par le bord externe de l'embase 14 et la paroi externe. Les glissières 8a, dans lesquelles coulissent les têtes 7 des leviers 6, s'étendent radialement depuis le bord libre de la jante de faible largeur vers la jante de grande largeur. De préférence chaque glissière est constituée de deux rails parallèles 24 disposés à écartement l'un de l'autre et formés chacun de deux ailes parallèles réunies l'une à l'autre selon l'un de leur bords longitudinaux par une âme. Les rails 24 ainsi formés présentent chacun une ouverture longitudinale et sont disposés l'un par rapport à l'autre en sorte que l'ouverture longitudinale de l'un soit tournée vers l'ouverture longitudinale de l'autre. Les pivots 7a que présente chaque tête 7 sont engagés respectivement dans les rails 24 de la glissière correspondante. De préférence la valeur de l'empattement de la tête 7 mesuré de l'extrémité libre d'un des pivots 7a à l'extrémité libre de l'autre est légèrement inférieure à la largeur du chemin de guidage que définissent les deux rails 24.

Comme dit précédemment la portion de câble située dans le logement traversant pratiqué de chaque pied 17 y est immobilisée dans ce dernier sans possibilité de déplacement axial, de mouvement rotation autour de son axe, de mouvement de pivotement et de fléchissement. En d'autres termes ladite portion de câble est encastrée dans le logement du pied. De plus, au moins l'une des deux sections extrêmes de cette portion et plus précisément de la portion encastrée se développe selon un plan oblique par rapport à l'axe de pivotement du pied dans son siège. En d'autres termes, la tangente à l'axe neutre du câble, passant par le centre de cette section forme un angle non nul avec l'axe de pivotement du pied 17 dans son siège. De cette façon lors du pivotement des leviers 6, sous l'effet de l'effort d'enfoncement appliqué par l'utilisateur sur le second élément 8, le plan P contenant l'axe de pivotement du pied et la tangente à l'axe neutre est amené à pivoter alors que le plan P' contenant toutes les parties de câble externes aux pieds des leviers et plus précisément les parties non encastrées, reste fixe en position. Il s'ensuit donc lors de ce mouvement de pivotement des leviers 6, l'apparition de moments de flexion, générateurs de contraintes internes dans le câble, essentiellement au niveau de chaque section extrême de l'encastrement. Lorsque l'effort d'enfoncement est relâché, les portions de câble internes aux pieds des leviers reviennent en position originelle sous l'effet de l'action de ces contraintes internes.

De préférence pour améliorer cet effet, le câble de transmission, dans le logement traversant du pied 17 présente une courbure de rayon identique à celui de la courbure de la gorge 4. En position d'écartement maximal des deux éléments 3, 8 l'un par rapport à l'autre, le moment de flexion est nul, les plans géométriques P sus-définis sont confondus avec le plan géométrique P' sus-défini. En position extrême d'écartement les leviers par leur corps occupent une position oblique par rapport au plan P' tandis que selon la position extrême d'enfoncement leur position est sensiblement parallèle à ce plan.
Selon la forme préférée de réalisation, le logement traversant du pied de chaque levier est cylindrique ou pour le moins son axe longitudinal est rectiligne et présente un diamètre supérieur à celui du câble. Grâce à cette caractéristique, la portion de câble interne au pied peut être courbée selon un rayon identique à celui des portions de câble externes aux pieds des leviers. Pour assurer la conservation de la courbure donnée au câble dans le pied, le logement traversant reçoit un matériau de remplissage tel de la colle qui vient combler les interstices et assurer l'immobilisation.

En variante, le logement traversant est en forme de secteur torique, la courbure du secteur torique étant identique à celle de la gorge constituant logement pour le câble de transmission. Selon cette variante, le diamètre du câble est voisin du diamètre du logement de façon que le dit câble puisse y être ajusté soit avec peu de jeu soit en léger serrage. Selon cette variante, le câble est toujours fixé par collage dans le logement.

L'introduction de colle dans le logement traversant de chaque pied est réalisée par passage au travers d'un perçage débouchant d'une part dans le logement et d'autre part sur la face externe cylindrique du pied. De préférence l'axe du perçage est contenu dans le plan géométrique de la section droite médiane du logement. Le flux de colle introduit dans le logement par un mécanisme de seringue, ou analogue, apte à réaliser une introduction sous pression, se divise en deux flux d'égales importances, lesquels, sous l'effet des forces de poussée générées par le mécanisme de seringue, sont propulsés respectivement vers les deux extrémités du logement. Pour un logement de diamètre supérieur au diamètre du câble et pour une disposition courbée du câble dans le logement, le perçage d'introduction de la colle se développe selon une corde de la section médiane et son embouchure dans le logement se situe à proximité du point sommital de la courbe que forme le câble. Ainsi le matériau de remplissage en l'espèce la colle, peut combler les volumes présents dans le logement extérieurement à la concavité que forme la courbe du câble.

Comme dit précédemment aux deux éléments 3 et 8 est associé un capteur 10 susceptible de délivrer un signal électrique de valeur représentative du degré d'éloignement ou d'enfoncement des deux éléments l'un par rapport à l'autre, ce signal électrique étant destiné à être utilisé préférentiellement pour la commande de l'accélérateur. Dans la forme préférée de réalisation, ce capteur 10 comporte une fourchette 26 portée par le second élément 8 et un potentiomètre linéaire 27 porté dans la gorge 4 par le premier élément 3 et actionné par la fourchette 26 laquelle est engagée dans la gorge 4 par passage au travers d'une échancrure 29 pratiquée dans la paroi externe 16, le câble 6 étant positionné dans la gorge 4 en sorte que ses deux extrémités soient disposées de part et d'autre de l'échancrure.

La paroi annulaire de recouvrement 19 est dotée, extérieurement à la gorge 4 qu'elle recouvre, d'au moins un capteur de pression 30 à faible course, apte à délivrer un signal électrique de valeur représentative de la pression qu'il encaisse, ce signal électrique étant destiné à être utilisé pour la commande des freins ou de l'embrayage. Selon la forme préférée de réalisation sont prévus plusieurs capteurs en segment de couronne circulaire disposés les uns à la suite des autres sur la paroi 19. Ces capteurs 30 sont recouverts par une paroi annulaire d'actionnement 31 solidaire du premier élément. Le bord interne de la paroi annulaire 31 d'actionnement est prolongé par une forme de jante 32 positionnée en regard de la paroi sans fin interne 15 à très faible écartement de cette demière. Cette disposition assure le centrage et le guidage de la paroi d'actionnement par rapport au premier élément 3. Il y a lieu de noter qu'en raison de la très faible course de cette paroi d'actionnement, par exemple de l'ordre de quelques dixièmes de millimètres et en raison du jeu fonctionnel entre la paroi interne 15 et la jante 32 de l'ordre de quelques dixièmes de millimètres, aucun effet d'arc-boutement n'est à craindre. Pour assurer le calage angulaire de la paroi d'actionnement par rapport au premier élément 3 tout en autorisant son déplacement en translation par rapport à ce demier, la jante 31 est dotée d'au moins une lumière oblongue 33 s'étendant de manière parallèle à l'axe géométrique de révolution des deux éléments 3, 8 et la paroi interne 15 est dotée d'au moins un téton radial 34 engagé dans la lumière oblongue 33.

On a précédemment décrit un câble unique auquel sont fixés plusieurs leviers mais en variante, on pourra prévoir plusieurs câbles de faibles longueurs associés chacun par leurs extrémités à deux leviers. Selon cette variante d'exécution, le pied de chaque levier est doté soit d'un logement traversant comme décrit précédemment, soit de deux logements borgnes opposés recevant chacun la partie terminale d'un câble de faible longueur. Ces logements borgnes pourront être cylindriques, auquel cas l'axe longitudinal de chacun de ces derniers sera oblique par rapport à l'axe longitudinal du pied. Ces logements borgnes pourront aussi être en forme de secteur torique la courbure du secteur torique étant identique à celle de la gorge de façon que le câble y adopte une courbure de rayon identique à celui de la courbure de la gorge. Selon l'une ou l'autre de ces dispositions le diamètre du logement sera égal ou inférieur au diamètre du câble de façon à réaliser un montage avec serrage. La fixation des câbles de faible longueur dans les logements des pieds pourra être effectuée par collage ou bien par goupilles transversales. Entre les leviers d'extrémité, le câble de faible longueur pourra comporter un ou plusieurs leviers intermédiaires, dans ce cas, le pied de ces leviers intermédiaires sera pourvu d'un logement traversant dans lequel sera engagé et fixé le câble de faible longueur de la même manière que pour une disposition à câble unique.

Le système de câble de faible longueur et leviers peut être unique mais on pourra prévoir plusieurs systèmes disposés dans une même gorge en prolongement mutuel. Avec une telle forme de réalisation seront prévus autant de seconds éléments que de systèmes de câbles de faibles longueurs et leviers, chaque système étant solidarisé à un second élément qui lui est propre. Avec une telle variante d'exécution, chaque second élément se présentera sous la forme d'un tronçon d'anneau.

On a précédemment décrit un dispositif de commande à main dont le premier élément ne comporte qu'une seule gorge mais en variante, le premier élément peut comporter plusieurs gorges concentriques recevant chacune un système de leviers avec câble unique ou à câbles de faibles longueurs, ce système par les leviers étant solidarisé à un second élément qui lui est propre.

Il va de soi que la présente invention peut recevoir tous aménagements et variantes du domaine des équivalences techniques sans pour autant sortir du cadre du présent brevet.

## Revendications

1. Dispositif de commande à main (1) destiné à être fixé à l'un des éléments de direction d'un véhicule à moteur et comprenant des moyens de commande de l'accélération du véhicule et/ou des moyens de commande du freinage et/ou des moyens de commande de l'embrayage et débrayage de la boîte à vitesse et/ou des moyens de commande du changement de vitesse, caractérisé en ce qu'il comprend un premier élément (3), dans lequel est creusée au moins une gorge (4) continue constituant logement pour au moins un câble (5) déformable en flexion et indéformable en torsion auquel sont rigidement fixés à écartement les uns des autres, plusieurs leviers de transmission (6) comportant chacun à l'opposé du câble, extérieurement à la gorge (4), une tête d'articulation (7), les leviers (6) par leur tête d'articulation (7) étant solidarisés à au moins un second élément, monté coaxialement par rapport au premier élément, les deux dits éléments (3, 8) étant montés l'un par rapport à l'autre de manière fixe en rotation et mobile en translation, selon leurs axes géométriques de révolution, l'un vers l'autre et inversement en éloignement l'un de l'autre, et ce entre une position extrême d'écartement et une position extrême d'enfoncement, l'un des dits éléments (3, 8) étant destiné à être fixé à l'un des éléments de direction et l'autre élément étant destiné à être manoeuvré par le conducteur et les dits éléments (3, 8) étant associés à un même capteur (10) susceptible de délivrer un signal électrique de valeur représentative de leur degré d'éloignement ou d'enfoncement l'un par rapport à l'autre, ce signal électrique étant destiné à être utilisé pour la commande de l'accélération ou des freins ou de l'embrayage.

2. Dispositif de commande à main selon la revendication 1, caractérisé en ce que le mouvement d'enfoncement des deux éléments (3, 8) l'un par rapport à l'autre s'effectue à l'encontre d'une force de rappel vers la position extrême d'écartement.

3. Dispositif de commande à main selon la revendication 1 ou la revendication 2, caractérisé en ce que chaque levier (6) comprend un pied (17) par lequel il est rigidement fixé à au moins un câble de transmission (5), et par lequel il est monté dans un siège (18) pratiqué dans la gorge (4).

4. Dispositif de commande à main selon la revendication 3, caractérisé en ce que le siège (18) de chaque pied (17) est formé par une portion de surface cylindrique formant empreinte en creux dans la gorge (4) et que la surface extérieure du pied est de forme cylindrique.

5. Dispositif de commande à main selon la revendication 3 ou la revendication 4, caractérisé en ce que le pied (17) de chaque levier (6) est doté d'au moins un logement traversant dans lequel est engagé au moins un câble de transmission (5), la portion de câble située dans le logement est immobilisée par rapport à ce dernier sans possibilité de déplacement axial, de mouvement rotation autour de son axe, de mouvement de pivotement et de fléchissement afin que lors du mouvement d'enfoncement des deux éléments (3, 8) l'un vers l'autre, des efforts de flexion puissent apparaître dans le câble (5), ces efforts de flexion étant à l'origine de contraintes internes génératrices de l'effort de rappel.

6. Dispositif de commande à main selon la revendication 5, caractérisé en ce que le câble de transmission (5), dans son logement du pied (17) présente une courbure de rayon identique à celui de la courbure de la gorge (4).

7. Dispositif de commande à main selon la revendication 6, caractérisé en ce que le ou les logement(s) du pied (17) de chaque levier (6) est ou sont en forme de secteur torique, la courbure du secteur torique étant identique à celle de la gorge (4).

8. Dispositif de commande à main selon l'une quelconque des revendications 5 à 7 caractérisé en ce que le pied présente deux logements borgnes opposés recevant chacun la portion terminale d'un câble 5.

9. Dispositif de commande à main selon la revendication 6, caractérisé en ce que le logement du pied (17) de chaque levier (6) est traversant et présente un diamètre supérieur à celui du câble (5) de façon que le dit câble (5), dans ledit logement, puisse y être courbé selon une courbure identique à celle de la gorge (4), ledit logement recevant de plus un matériau de remplissage.

10. Dispositif de commande à main selon l'une quelconque des revendications 5 à 8, caractérisé en ce que le ou les câble(s) (5) est ou sont fixé(s) dans le ou leur logements par collage.

11. Dispositif de commande à main selon la revendication 8 caractérisé en ce que les câbles sont fixés dans leur logement respectif chacun par une goupille transversale.

12. Dispositif de commande à main selon l'une quelconque des revendications 6 à 11, caractérisé en ce que la position du levier (6) par rapport au plan contenant l'axe neutre de la portion de câble dans le logement du pied (17) est oblique.

13. Dispositif de commande à main selon l'une quelconque des revendications précédentes, caractérisé en ce que la gorge (4) constituant logement pour le câble (5) est recouverte d'une paroi annulaire 19 venant au contact ou à très faible distance du pied (17) de chaque levier (6) et que ladite paroi est dotée de plusieurs échancrures radiales (20) pratiquées vers le centre depuis son rebord périphérique externe, dans chacune desquelles s'engage un levier (6), les leviers (6), en position d'écartement maximal du second élément (8) par rapport au premier venant buter contre le fond de l'échancrure (20) correspondante.

14. Dispositif de commande à main selon la revendication 13, caractérisé en ce que la paroi annulaire (19) est dotée, extérieurement à la gorge (4) d'au moins un capteur (30) de pression, à faible course, apte à délivrer un signal électrique de valeur représentative de la pression qu'il encaisse, ce signal électrique étant destiné à être utilisé pour la commande des freins ou de l'embrayage.

15. Dispositif de commande à main selon la revendication 14, caractérisé en ce que le capteur (30) ou les capteurs (30.) de pression est ou sont recouvert(s) par une paroi annulaire d'actionnement (31) solidaire du premier élément (3).

16. Dispositif de commande à main selon l'une quelconque des revendications précédentes, caractérisé en ce que la tête (7) de chaque levier (6) est constituée par deux pivots (7a) alignés et axialement opposés, de forme cylindrique et que le second élément (8) comprend, en regard du premier élément (3), une pluralité de glissières (8a), régulièrement écartées, dans chacune desquelles s'engage en coulissement la tête (7) d'un levier (6) et d'un seul.

17. Dispositif de commande à main selon l'une quelconque des revendications 2 à 16, caractérisé en ce que l'effort de rappel est généré par au moins un organe élastique de rappel (11) interposé entre les deux éléments (3), (8).

18. Dispositif de commande à main selon la revendication 17, caractérisé en ce que l'organe élastique de rappel (11) est constitué par un ressort à spires et que parallèlement à l'axe géométrique de révolution, le premier élément (3) est pourvu d'un pion saillant (12) autour duquel est engagé l'organe élastique de rappel (11), ce dit organe étant par ailleurs engagé dans une forme de douille (13) ménagée dans le second élément (8).

19. Dispositif de commande à main selon l'une quelconque des revendications précédentes, caractérisé en ce que le premier élément (3) comprend d'une part une embase (14) en forme de couronne circulaire comportant un rebord circonférentiel intérieur et un rebord circonférentiel extérieur et d'autre part deux parois sans fin, une interne (15), l'autre externe (16), toutes deux en saillie sur l'embase (14) et disposées concentriquement à écartement l'une de l'autre et formant le logement (4) du câble (5).

20. Dispositif de commande à main selon la revendication 18 et la revendication 19, caractérisé en ce que la paroi interne (15) est située dans le prolongement du rebord circonférentiel interne de l'embase (14), et que l'autre paroi (16) est située à écartement du rebord circonférentiel externe, le pion de centrage (12) formant saillie sur la surface en couronne circulaire située entre la paroi sans fin externe (16) et le rebord externe de l'embase (14).

21. Dispositif de commande à main selon l'une quelconque des revendications précédentes, caractérisé en ce que le second élément (8) est formé de deux jantes cylindriques d'inégales largeurs, l'une interne (21) l'autre externe (22), disposées concentriquement l'une dans l'autre, et réunies l'une à l'autre par une paroi de liaison (23), la jante de faible largeur étant la jante interne.

22. Dispositif de commande à main selon la revendication 16 et la revendication 21, caractérisé en ce que les glissières (8a) dans lesquelles coulissent les têtes (7) des leviers (6) s'étendent radialement depuis le bord libre de la jante de faible largeur (21) vers la jante de grande largeur (22).

23. Dispositif de commande à main selon la revendication 15 et la revendication 19, caractérisé en ce que le bord interne de la paroi annulaire d'actionnement (31) est prolongé par une forme de jante (32) venant se positionner en regard de la paroi sans fin interne (21) et que ladite jante (32) est dotée d'au moins une lumière oblongue (33) parallèle à l'axe géométrique de révolution des deux éléments (3, 8) dans laquelle est engagé un téton radial (34) fixé à la paroi interne sans fin du premier élément (3).
